# EUROPEAN PATENT APPLICATION

(11) **EP 2 412 653 A1**
(43) Date of publication of application: **01.02.2012**
(21) Application number: 09842237.1
(22) Date of filing: 26.03.2009
(51) Int. Cl.: B65G 65/48, F16K 3/22, F16K 5/06

(54) **VALVE FOR POWDER**

(71) Applicant: Mitsui Engineering & Shipbuilding Co., Ltd., Chuo-ku Tokyo 104-8439 (JP)
(72) Inventor: MIYAZAKI, Takayuki, Osaka-shi Osaka 550-0014 (JP); TAKEDA, Yasuhide, Osaka-shi Osaka 550-0014 (JP); FUKUI, Shigeo, Kobe-shi Hyogo 651-2274 (JP); TAKAHASHI, Shinji, Tokyo 104-8439 (JP); ARAI, Takashi, Ichihara-shi Chiba 290-8601 (JP)
(74) Representative: Grünecker, Kinkeldey, Stockmair & Schwanhäusser
(86) International application number: PCT/JP2009/056105
(87) International publication number: WO 2010/109623

(57) **Abstract**

A powder valve is propose which is simple in structure and small in size, which can prevent powder from getting stuck in the valve, and can withstand high feed pressure. The valve includes a valve casing 21, a valve shaft 25, and a valve body 22 mounted in the valve casing 21 and supported by the valve shaft 25.The valve body 22 has a spherical outer surface 27 configured to be brought into contact with a valve seat 23 of the valve casing 21 to close the valve. The valve body 22 is formed with a communication hole 26 extending in a direction perpendicular to the valve shaft 25 so that when the valve body 22 is rotated about the valve shaft 25 in either of two opposite directions from the closed position, the valve is configured to open through the communication hole 26. The communication hole 26 is open on the back side of the valve body 22 over the entire length thereof. With this arrangement, it is possible to ensure the advantages of a ball valve, i.e. full-bore properties and high rigidity. Since the pressure of powder flowing through the communication hole 26 acts on the inner periphery of the valve casing 21, the flow of powder blows off and removes any powder which could otherwise get stuck on the inner periphery of the valve casing 21. By rotating the valve body 22 in both directions, powder can be removed on both sides of the valve shaft 25.

## Description

### TECHNICAL FIELD

The present invention relates to a powder valve used to open and close a passage through which powder is transferred.

### BACKGROUND ART

When transferring powder in e.g. factories, a valve (on-off valve) is provided in the powder passage for opening and closing the powder passage. This valve is used to control the feed amount of powder, and especially if powder is fed under high pressure, this valve is frequently a full-bore valve or a ball valve, of which the valve body has high rigidity.

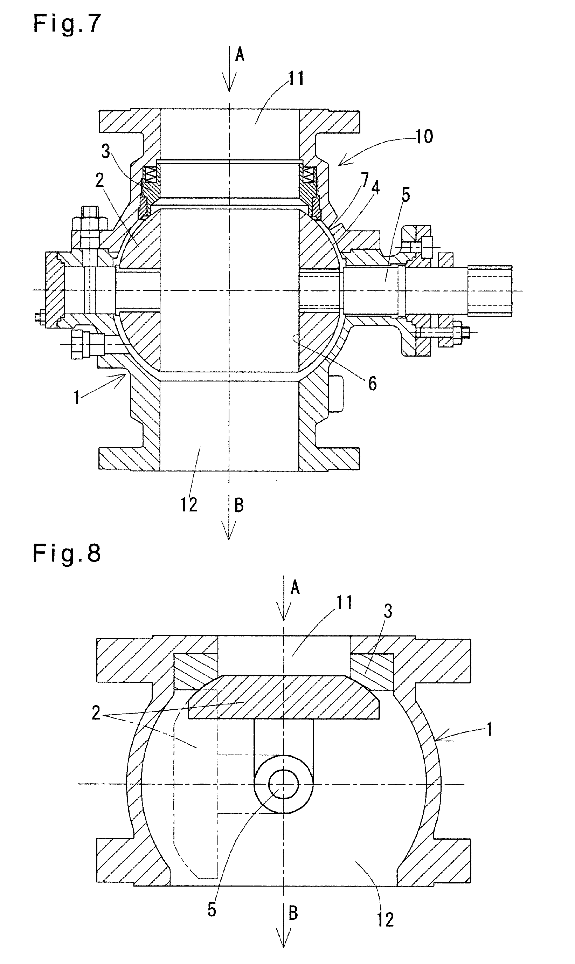

If a ball valve such as a powder valve 10 shown in Fig. 7 is used, powder introduced through an inlet port 11 of a valve housing 1 mostly flows through a communication hole 6 formed in the valve body 2 into an outlet port 12 (see arrows A and B in Fig. 7). But part of the powder tends to get stuck in the gap 4 between the valve casing 1 and the valve body 2. This phenomenon tends to occur when the valve body 2 is slightly open (i.e. when the valve body 2 is in a position between the fully open position and the fully closed position where the valve hole is slightly open). If such powder is left unattended, it may interfere with smooth opening and closing of the valve.
Especially if the powder is coagulable, power that has entered the gap tends to coagulate and the coagulated masses could grow to such an extent as to make it impossible to open and close the valve.

To avoid this problem, it is known to provide a gas injection hole 7 communicating with the gap 4 to remove powder in the gap by supplying air into the valve housing 1 through the gas injection hole 7 (see e.g. Patent document 1).

While not a powder valve, Fig. 8 shows a conventional segment ball valve for use in a tap water system.
As with an ordinary ball valve, this segment ball valve (such as the one disclosed in Patent document 2) can be opened by turning the valve body 2 either clockwise or counterclockwise from the closed position shown. The valve body 2 of this valve is lightweight.

Patent document 1: JP Patent Publication 2001-289335A
Patent document 2: JP Patent Publication 2005-249177A

### DISCLOSURE OF THE INVENTION

### OBJECT OF THE INVENTION

With the valve shown in Fig. 7, it is necessary to provide the gas injection hole 7 in the valve casing 1 and to provide a device for periodically blow gas into the gas injection hole 7. This complicates the valve and requires frequent maintenance.

The valve shown in Fig. 8 has a valve body comprising a plate member having a front side configured to be brought into and out of contact with the valve seat, and a support member protruding from the back side of the plate member and supported by the valve shaft. Thus, the valve body is not spherical as in the case with the valve body of a ball valve.
The valve body of this valve is therefore low in rigidity compared to the valve body of an ordinary ball valve. Since the valve body is low in rigidity, especially if powder is fed under high pressure, the valve body may not be able to withstand the feed pressure. If a valve body is used which can withstand high feed pressure, it will be necessary to use a large and expensive valve device.

An object of the present invention is to provide a powder valve which is simple in structure and small in size, which can prevent powder from getting stuck in the valve, and can withstand high feed pressure.

### MEANS TO ACHIEVE THE OBJECT

In order to achieve this object, the present invention provides a valve for powder comprising a valve casing, a valve shaft, a valve body mounted in the valve casing and rotatably supported by the valve shaft, the valve casing having an inlet port, and an annular valve seat provided at the inlet port of the valve casing, wherein the valve body has a spherical outer surface configured to be brought into contact with the valve seat over the entire circumference of the valve seat when the valve body is in a closed position, wherein the valve body is formed with a communication hole extending in a direction perpendicular to an axis p of the valve shaft, wherein when the valve body is rotated about the valve shaft in either of two opposite directions from the closed position, the valve is configured to open through the communication hole, and wherein the communication hole is open at its portion opposite to its side facing the valve seat in the closed position, over an entire length of the communication hole.

With this arrangement, in which the valve is closed when the spherical surface of the valve body is brought into contact with the valve seat over the entire circumference of the valve seat, and in which the valve opens through the communication hole formed in the valve body when the valve body is rotated about the valve shaft, it is possible to achieve the advantages of a ball valve, i.e. full-bore properties and high rigidity.
Since the communication hole formed in the valve body is open at its portion opposite to its side facing the valve seat in the closed position, over the entire length of the communication hole, in the open position, the pressure of powder flowing through the communication hole acts on the portion of the inner periphery of the valve casing facing the opening of the communication hole. Thus, the flow of powder blows off and removes any powder which could otherwise get stuck on this portion of the inner periphery of the valve casing.
Since the valve can be opened by rotating the valve body about the valve shaft in either direction from the closed position, it is possible to remove powder that have gotten stuck on the inner periphery of the valve casing on both sides of the valve shaft by rotating the valve body in both directions.

Thus, there is provided a powder valve which is simple in structure and small in size, which can prevent powder from getting stuck in the valve, and can withstand high feed pressure.

The valve body may be hemispherical. A hemispherical valve body significantly increases the distance between the valve body and the valve casing on the open side of the communication hole (which is the opposite side of the spherical surface) in the open position. Since this distance is large, the pressure of powder flowing through the communication hole can more readily act on the entire inner periphery of the valve casing, which in turn makes it possible to more effectively remove powder stuck on the inner periphery of the valve casing.
Another advantage of the hemispherical valve body is that it is lighter in weight than a completely spherical valve body while keeping its sufficient rigidity.

In any of the above arrangements, the inner periphery of the valve casing may have a spherical surface configured such that in the open position, the gap between the spherical surface of the valve body and the spherical surface on the inner periphery of the valve casing gradually increases as it is farther away from the valve seat.
With this arrangement, when the valve body rotates from the closed position toward one of the open positions, the valve body can more effectively scrape off powder.

While the valve is moving to the open position, powder is scraped off by being pushed or pulled by the opposed portions of the outer periphery of the valve body and the inner periphery of the valve casing as these portions move relative to each other, and thus powder is gradually discharged downstream, i.e. in the direction away from the valve seat.
As powder is scraped off, powder disposed in the above gap gradually collects into masses, and these masses may increase in volume and get trapped between the valve body and the valve casing before the valve body moves to the fully open position.
But by setting the gap between the valve body and the valve casing so as to gradually increase as it is farther away from the valve seat, powder can be smoothly discharged downstream without getting trapped.

### ADVANTAGES OF THE INVENTION

The present invention provides a powder valve which is simple in structure and small in size, which can prevent powder from getting stuck in the valve, and can withstand high feed pressure.

### BRIEF DESCRIPTION OF THE DRAWINGS

Fig. 1(a) and 1(b) are sectional side views of an embodiment of the present invention, showing its closed state and open state, respectively.
Fig. 2 is a plan view thereof.
Fig. 3 is a front view thereof.
Figs. 4(a), 4(b) and 4(c) are perspective views of a valve body and a valve seat of the embodiment, showing their positional relationship while the valve is closed (Fig. 4(a)) and while the valve is open (Figs. 4(b) and 4(c)).
Fig. 5 shows how the valve is opened and closed.
Fig. 6(a) and 6(b) are perspective views of valve bodies of different embodiments.
Fig. 7 is a front view of a conventional powder valve of the ball valve type.
Fig. 8 is a front view of a conventional segment ball valve.

### DESCRIPTION OF THE NUMERALS

- 1, 21.: Valve casing
- 2, 22.: Valve body
- 3, 23.: Valve seat
- 4, 24.: Gap
- 5, 25.: Valve shaft
- 6, 26.: Communication hole
- 7.: Gas injection hole
- 8.: Operating member
- 10, 20.: Powder valve
- 11.: Inlet port
- 12.: Outlet port
- 13, 27.: Spherical surface
- 28.: Ridgeline
- 29.: Chamfer
- 22a.: Front side
- 22b.: Back side
- p.: Central axis of the valve shaft
- q.: Central axis of the communication hole

### BEST MODE FOR EMBODYING THE INVENTION

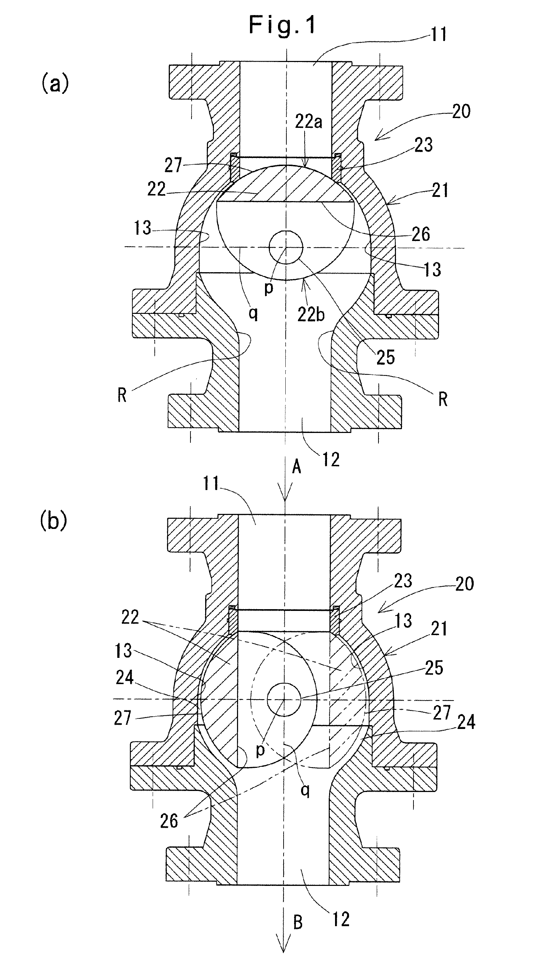

Now the first embodiment is described with reference to Figs. 1 to 5. This embodiment is a valve 20 for powder provided in a transportation line for powder, such as a pipeline for pressure-feeding powder of natural gas hydrate.

As shown in Fig. 1, the valve 20 comprises a valve casing 21 having an inlet port 11 and an outlet port 12, and a valve body 22 mounted in the valve casing 21 and supported by a valve shaft 25 so as to be rotatable about the shaft 25.

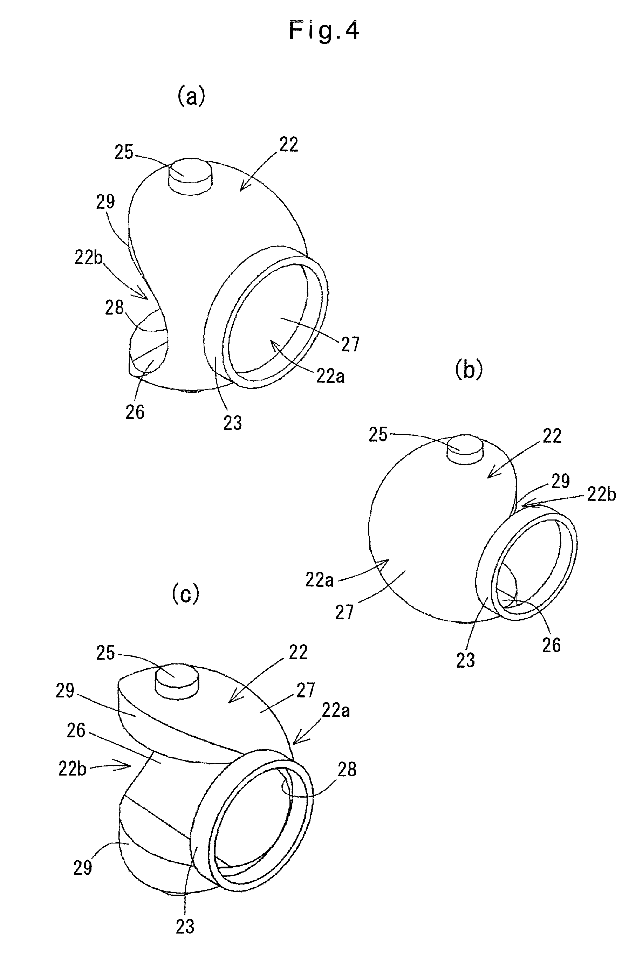

As shown in Figs. 4(a) to 4(c), the valve body 22 is a substantially hemispherical member formed by forming a straight communication hole 26 having a circular cross-section in a spherical member whose section is completely circular when taken along any plane, and then by removing about half the spherical member on one side of the communication hole 26 such that the communication hole 26 is open at a backside 22b, i.e. a surface of the hemispherical valve body 22 formed by removing half the spherical member, over the entire length of the communication hole 26.

The valve casing 21 has an annular valve seat 23 at the inlet port 11 that faces toward the outlet port 12. Thus, when the front surface 22a, i.e. the spherical surface 27, of the valve body 22 faces toward the valve seat 23, the spherical surface 27 liquid-tightly contact the valve seat 23 over the entire circumference thereof. In this state, the valve 20 for powder is closed (as shown in Figs. 1(a) and 4(a)).

The valve shaft 25 has a central axis p that intersects the central axis q of the communication hole 26 at a right angle at the center of spherical surface 27. When the valve body 22 is at the position shown by solid line or phantom line in Fig. 1(b), the powder valve is in the open position where inlet port 11 communicates with the outlet port 12 through the communication hole 26 (see Figs. 4(b) and 4(c)).
Thus, this powder valve 20 is moved into the open position by rotating the valve body 22 about the valve shaft 25 by 90 degrees from the closed position.

As shown in Fig. 4(a), the spherical surface 27 is defined by a ridgelines 28 in the form of a sharp edges located near its portion in abutment with the valve seat 23 when the valve body 22 is in the closed position. As shown in Fig. 4(c), chamfers 29 are defined between the spherical surface 27 and the inner periphery of the communication hole 26 at portions near the valve shaft 25.

The inner periphery of the valve casing 21 has a spherical surface 13 extending along the spherical surface 27 of the valve body 22 from the valve seat 23 to the outlet port 12. In the open position, a gap 24 exists between the spherical surface 13 on the inner periphery of the valve casing 21 and the spherical surface 27 of the valve body 22. The width of the gap 24 gradually increases from the valve seat 23 toward the outlet port 12.

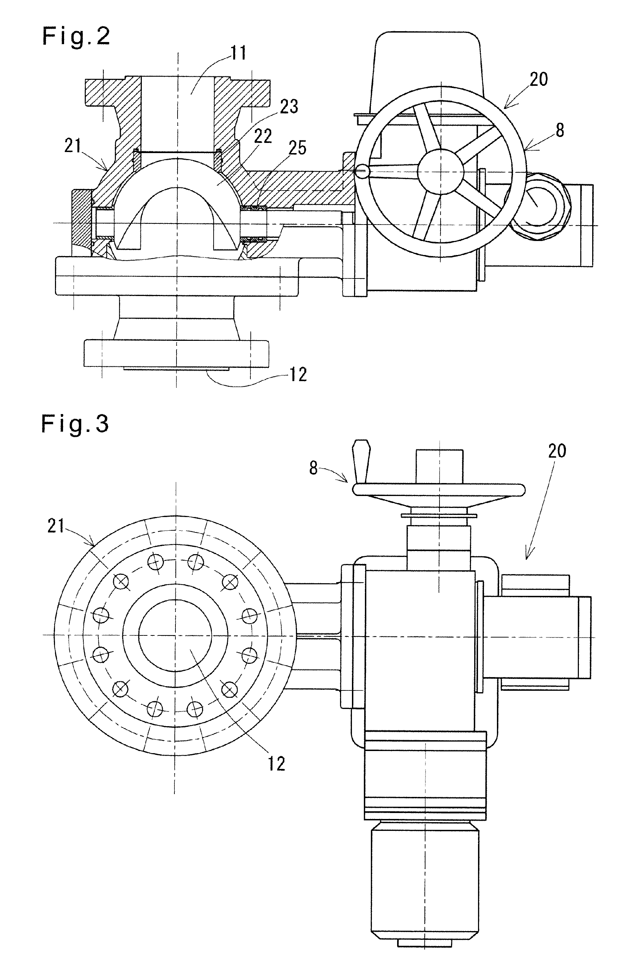

Now the operation of this powder valve is described. In the closed poison shown in Fig. 1(a), an operating member 8 (see Figs. 2 and 3) operatively coupled to the valve shaft 25 is turned, the valve body 22 rotates about the valve shaft 25 to an open position shown e.g. by the solid line in Fig. 1(b).
In this open position, powder introduced through the inlet port 11 of the valve casing 21 mostly flows through the communication hole 26 in the valve body 22 into the outlet port (as shown by arrows A and B in Fig. 1(b)).

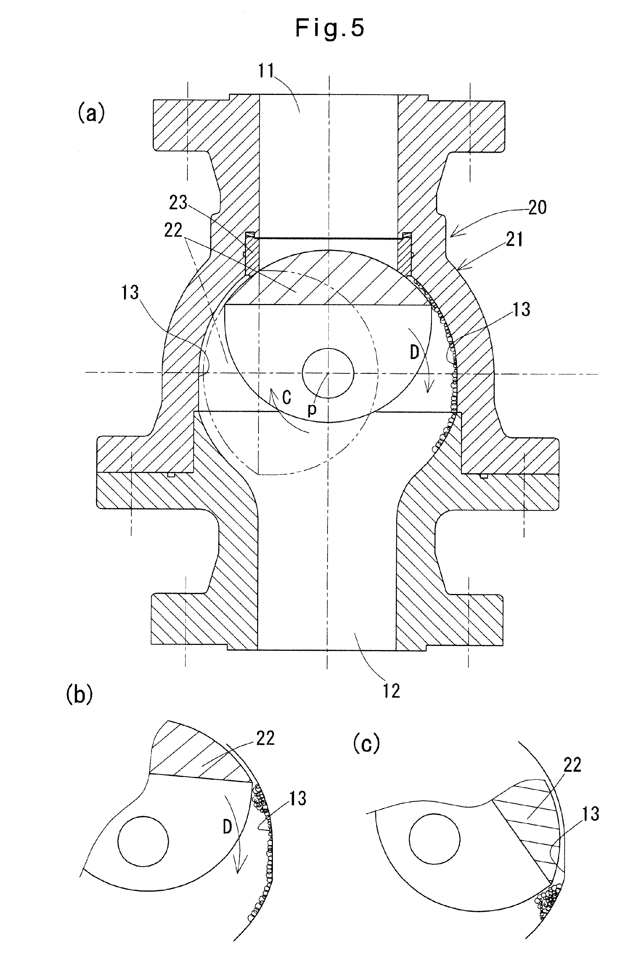

Since the spherical surface 13 on the inner periphery of the valve casing 21 is a concave spherical surface, in the open position, powder tends to gradually adhere to the spherical surface 13, especially to its portion corresponding to the back 22b of the valve body 22, as shown e.g. in Fig. 5(a).
But since the communication hole 26 is open to the above portion of the spherical surface 13 over the entire length of the communication hole 26, most of the powder adhered to the spherical surface 13 is guided downstream by the flow of the powder. This keeps the amount of powder adhered to the spherical surface 13 to a low level at all times.

When the operating member 8 (see Figs. 2 and 3) is turned in the opposite direction to the above, the valve body 22 is rotated about the valve shaft 25 to the closed position shown in Fig. 1(a) and then to another position shown by phantom line in Fig. 1(b).

When the valve body 22 rotates as shown by the arrows C and D in Fig. 5(a), powder adhered to the inner surface of the valve casing 21 is pushed by the edgy ridgeline 28 of the valve 22 as shown in Fig. 5(b) and is gradually guided downstream away from the valve seat 23. Since the ridgelines 28 are edgy, they can effectively scrape off powder. Since the valve body 22 is hemispherical, each ridgeline 28 can scrape a larger area of the spherical surface 13 when the valve body 22 rotates about the valve shaft 25. This makes it possible to further efficiently scrape off powder.

Since the gap 24 between the spherical surface 27 of the valve body 22 and the spherical surface 13 on the inner periphery of the valve casing 21 expands gradually as it is farther away from the valve seat 23, even though the powder scraped off as the valve body 22 rotates may collect into a large mass as shown in Fig. 5(c), such powder will never interfere with the rotation of the valve body 22, and can be smoothly guided downstream and discharged.

By repeatedly moving the vale body between the position shown by solid line in Fig. 1(b) and the position shown by phantom line in Fig. 1(b), it is possible to remove powder collected on the inner periphery of the valve casing 21 on both sides of the valve shaft 25.
In order to minimize the amount of power that adheres to the inner periphery of the valve casing 21, as shown in Fig. 1, the spherical surface 13 of the valve casing 21 where the valve body 22 is mounted is smoothly connected to the inner periphery of the outlet port 12 through an arcuate portion (indicated by the letter R) extending over the entire circumference.

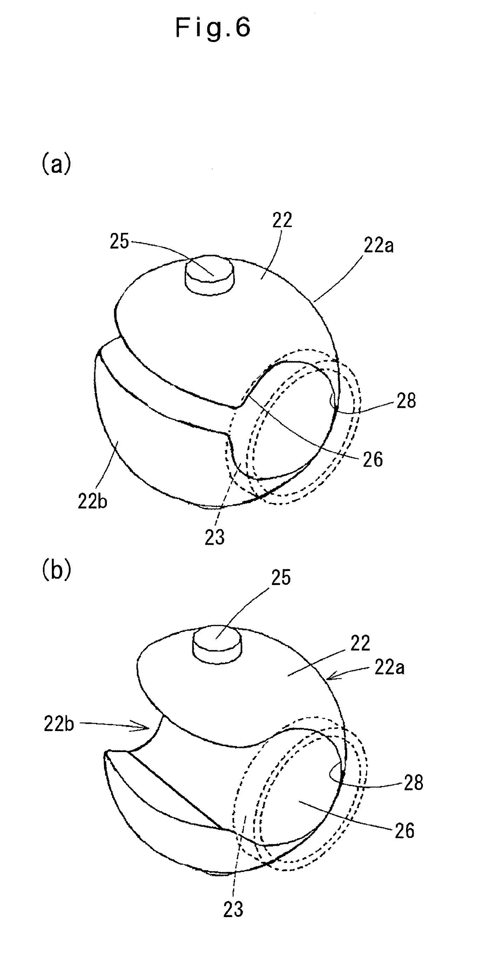

In the embodiment, the valve body 22 is hemispherical. But it may be in any other shape. For example, a valve body 22 shown in Fig. 6(a) may be used which is nearer in shape to a sphere than the valve body 22 of the above embodiment. Or a valve body 22 shown in Fig. 6(b) may be used which is substantially completely spherical. Although not shown in Figs. 6(a) and 6(b), chamfers 29 may be provided in either of the embodiments of Figs. 6(a) and 6(b).
In these embodiments too, since a communication hole 26 is formed in the valve body 22 that opens at the backside 22b of the valve body 22 over the entire length of the hole 26, power can be removed as effectively as in the first embodiment. The valve body 22 may be formed based not on a sphere but on an ellipsoid.

## Claims

1. A valve for powder comprising a valve casing 21, a valve shaft 25, a valve body 22 mounted in the valve casing 21 and rotatably supported by the valve shaft 25, said valve casing 21 having an inlet port 11, and an annular valve seat 23 provided at the inlet port 11 of the valve casing 21, wherein said valve body 22 has a spherical outer surface 27 configured to be brought into contact with the valve seat 23 over the entire circumference of the valve seat 23 when the valve body 22 is in a closed position, wherein said valve body 22 is formed with a communication hole 26 extending in a direction perpendicular to an axis p of the valve shaft 25, wherein when the valve body 22 is rotated about the valve shaft 25 in either of two opposite directions from the closed position, the valve is configured to open through the communication hole 26, and wherein the communication hole 26 is open at its portion opposite to its side facing the valve seat 23 in the closed position, over an entire length of the communication hole 26.

2. The valve for powder of claim 1 wherein the valve body 22 is hemispherical.
